# EUROPÄISCHE PATENTSCHRIFT

(11) **EP 1 027 952 B1**
(45) Veröffentlichungstag und Bekanntmachung des Hinweises auf die Patenterteilung: **02.01.2004**
(21) Anmeldenummer: 00102861.2
(22) Anmeldetag: 11.02.2000
(51) Int. Cl.: B23Q 1/01, B27M 1/08, B27C 9/04

(54) **Holzbearbeitungsanlage in Portalbauweise**
Portal-type wood-working machine
Machine de travail du bois du type à portique

(30) Priorität: 12.02.1999 DE 19905876
(43) Veröffentlichungstag der Anmeldung: 16.08.2000
(73) Patentinhaber: Hundegger, Hans, D-87749 Hawangen (DE)
(72) Erfinder: Hundegger, Hans, D-87749 Hawangen (DE)
(74) Vertreter: Pfister, Helmut, Dipl.-Ing.

(56) Entgegenhaltungen:
- EP-A- 0 663 262
- DE-A- 4 332 630
- US-A- 4 244 104

## Beschreibung

Die Erfindung betrifft eine Holzbearbeitungsanlage in Portalbauweise für Werkstücke, insbesondere Balken, Platten oder Bauelemente, wie vorgefertigte Wände, die im wesentlichen aus Holz bestehen, wobei das Portal das Werkstück über- oder untergreift und an dem Portal ein Bearbeitungswerkzeug vorgesehen ist, das mindestens in einer Ebene auf dem Portal bewegbar angeordnet ist und gegen das Werkstück anstellbar ist, gemäss dem Oberbegriff des Anspruchs 1. (Siehe z.B., DE-4332 630-A).

Eine Holzbearbeitungsanlage in Portalbauweise ist beispielsweise in der EP-OS 0 608 746 beschrieben. Hier dient diese Anlage insbesondere zur Bearbeitung von langen werkstücken, wie Balken, die auf einem verfahrbaren Spannwagen angeordnet sind und zum Bearbeitungswerkzeug hingeführt werden.

Bei der Ausführung der Bearbeitung des Werkstücks kann es auch notwendig werden, die Bearbeitungsrichtung zu ändern, wobei dann das Werkstück in die entgegengesetzte Richtung verfahren wird. Das gesamte Werkstück wird somit, je nach Bearbeitungsstand, vor- und zurückgefahren. Bei leichteren Werkstücken, wie Balken, ist es leicht zu verwirklichen, jedoch bei schweren oder großflächigen Werkstücken bedeutet dies jedesmal die Beschleunigung von großen Massen. Zum einen ist das Beschleunigen der großen Massen energieaufwendig. Des weiteren besteht die Gefahr einer ungewollten Verrückung des Werkstückes, zum Beispiel wenn dieses bei dem verfahren gegen ein Hindernis fährt. Hieraus resultieren Bearbeitungsungenauigkeiten.

Darüber hinaus ist die bekannte Vorrichtung verhältnismäßig platzaufwendig, da vor und hinter dem Portal mindestens in der Länge der zu bearbeitenden Werkstücke Platz vorgesehen werden muß, um eine allseitige Bearbeitung sicherzustellen.

Im Holzhausbau werden Platten zum Beispiel aus mehreren Schichten aufgebaut. Sie bestehen aus verhältnismäßig groben Spanplatten und einem Kern aus einer Isolierung. Als Isolierung kann Styropor oder auch Schaumstoff oder dergleichen Verwendung finden. In derartige Platten sind Öffnungen für Fenster und Türen einzubringen. Bisher ist bekannt, daß ein Arbeiter mit einer Kettensäge eine entsprechende Öffnung von oben in die Platte einarbeitet. Die Verwendung von einer Kettensäge ist insofern von Vorteil, da diese sich selbständig durch die Platte durcharbeitet und keine Blindbohrungen (im Gegensatz zu einer Stichsäge) benötigt. Die herausgeschnittene Öffnung erfährt dann eine Freifräsung im mittleren Bereich, wobei die Freifräsung so ausgeführt wird, daß die Isolation gegenüber der Kante der Platte zurücksteht, damit ihr ein Deckel aufgesetzt werden kann. Es ist klar, daß die anfangs durchgeführten Arbeiten sehr aufwendig und auch für den Arbeiter verhältnismäßig gefährlich sind, da dieser von oben, auf der Platte stehend, in diese die Öffnungen mit der Kettensäge einschneiden muß.

Es ist Aufgabe der Erfindung, eine Holzbearbeitungsanlage zu schaffen, die ermöglicht, große Werkstücke zu fixieren und zu bearbeiten, wobei aber der Platzbedarf einer solchen Anlage möglichst gering ist.

Diese Aufgabe wird mit den Merkmalen des Anspruchs 1 gelöst.

Eine solche Ausgestaltung ist günstig, da zusätzliche Halteelemente für das Werkstück nicht vorgesehen werden müssen und trotzdem das Werkstück bezüglich des Portals genau positioniert ist. Die Abstützelemente können zum Beispiel mit dem Portal mitfahren oder durch eine Teleskopanordnung feststehend ausgebildet sein. In dem Fall, daß die Abstützelemente mit dem Portal mitfahren, sind diese zum Beispiel als Rollen ausgebildet. Es ist aber auch möglich, daß die Abstützelemente tischbeinartig ausgebildet sind und sich relativ zum Werkstück während des Einsatzes nicht bewegen. In diesem Fall dient eine Teleskopanordnung, die inbesondere eine Beweglichkeit in Portalrichtung erlaubt. Zum Absenken der Abstützelemente, also in Anstellrichtung auf das Werkstück, ist es ebenfalls möglich, eine Teleskopanordnung vorzusehen, die durch einen Arbeitszylinder, zum Beispiel einen Pneumatikzylinder (einfach oder doppelt wirkend), bewegt wird.

Die Abstützelemente werden hierbei von dem Portal gegen das Werkstück geführt und drücken das Werkstück auf den Werktisch. Der Werktisch bietet somit das Widerlager für die Abstützelemente. Es kann hierbei vorgesehen sein, ein Abstützelement oder auch mehrere Abstützelemente anzuordnen. Dabei wird das Abstützelement gegen das Werkstück bewegbar ausgebildet, um insbesondere der unterschiedlichen Dicke des Werkstückes Rechnung zu tragen und auch durch ein Rückziehen des Abstützelementes von dem werkstück dieses wieder freizugeben.

Durch die erfindungsgemäße Ausgestaltung wird erreicht, daß der Platzbedarf für die Holzbearbeitungsanlage im wesentlichen auf die maximale Länge des Werkstückes beschränkt ist. Die Schienenbahn erstreckt sich neben dem Holzwerkstück und ist natürlich etwas länger ausgebildet als die Länge des Werkstückes, um auch eine einseitige Bearbeitung des Werkstückes sicher durchzuführen. Da das Werkstück gegenüber dem Bearbeitungswerkzeug nicht bewegt wird, sondern das Portal verfahren wird, dient diese Verfahrbewegung auch als Bewegung des Bearbeitungswerkzeuges.

Das Werkzeug befindet sich hierbei an einem Werkzeughalter, der um mehrere Achsen, insbesondere zum Beispiel aus fünf Achsen, bewegbar oder drehbar angeordnet ist. Der Werkzeughalter kann auch mehrere Werkzeuge halten. Die körperlich schwere Arbeit des Einarbeitens der Öffnungen in die Platten wird durch eine entsprechende Ausgestaltung des Werkzeuges an dem Portal eingespart. Da eine Person nicht mehr auf den Platten stehend mit der Kettensäge die Öffnungen herausarbeitet, besteht auch hier keine Verletzungsgefahr mehr.

Durch die Portalanordnung ist das Werkzeug, welches sich zum Beispiel an einem werkzeughalter befindet, in einer horizontalen Richtung verschiebbar und ein an dem Portal angeordneter Kreuzschlitten, welcher zum Beispiel den Werkzeughalter trägt, ermöglicht eine Bewegung in eine weitere horizontale und eine vertikale Richtung. Somit sind Bewegungen des Werkzeuges in alle drei Dimensionen möglich. Durch die Höhenverstellbarkeit des Werkzeughalters ist die Eindringtiefe des Werkzeugs in das Werkstück bestimmbar, um den Werktisch möglichst nicht zu verletzen, auf dem das Werkstück aufliegt. Durch die vertikale Einstellbarkeit (Höhenverstellbarkeit) des Werkzeughalters bzw. des damit verbundenen Bearbeitungswerkzeuges können zum Beispiel Bearbeitungen durchgeführt werden, die nur in einer gewissen Werkstücktiefe vorgesehen sind, das Werkstück aber nicht vollständig durchdringen sollen. Dies kann zum Beispiel bei dem Einarbeiten von Hinterschneidungen oder Ausfräsungen von Vorteil sein.

Insbesondere dann, wenn Hinterschneidungen erzeugt werden sollen, um zum Beispiel die Isolierung gegenüber der Wandung zurückzusetzen, damit anschließend das Werkstück an dieser Stelle verblendet werden kann, ist eine genaue Positionierung des Bearbeitungswerkzeugs notwendig.

Es ist vorteilhaft, wenn an dem Kreuzschlitten ein um ein oder mehrere Achsen drehbares zwischenstück und an diesem ein Antrieb für das Bearbeitungswerkzeug angeordnet ist. Bei einer solchen Ausgestaltung wird erreicht, daß das Bearbeitungswerkzeug beliebig orientiert werden kann und neben der Beweglichkeit entlang der drei Raumachsen auch eine beliebige Verschwenkbarkeit gegeben ist, um zum Beispiel schräge Bohrungen oder Zapfen auszuführen. Der Antrieb des Werkzeuges kann hierbei ebenfalls auf dem Zwischenstück angeordnet sein oder aber zum Beispiel durch eine flexible Welle von einem an dem Portal vorgesehen Antrieb abgeleitet sein.

Durch die Holzbearbeitungsanlage sollen an dem Werkstück verschiedene Bearbeitungen, wie Sägen, Bohren, Fräsen usw., ausgeführt werden. Es ist möglich, nach jedem Arbeitsgang die Werkzeuge zu wechseln, oder es ist ein Werkzeugmagazin vorgesehen, das mit allen Werkzeugen bestückt ist.

Bei Platten, die beispielsweise als Wände für den Bau von Holzhäusern nach der Timber-frame-Technologie benötigt werden, sollen durch die erfindungsgemäße Holzbearbeitungsanlage insbesondere die Öffnungen für Türen und Fenster ausgeschnitten werden. Günstigerweise trägt das Portal bzw. der Werkzeughalter an dem Portal die entsprechenden Bearbeitungswerkzeuge, um ein Ausschneiden aus den vorgefertigten Wänden zu ermöglichen und hernach gleichzeitig am Randbereich eine Ausfräsung einzuarbeiten, um den Mittelbereich der Platte, welche die Isolation aufnimmt, durch einen zusätzlichen Deckel hinterher bündig zu verschließen.

Die Werkstücke liegen auf einem Werktisch auf und sind dort mit Spaxhaltern, Nadeln oder Anschlägen fixiert. Nun wird die Säge, zum Beispiel zum Aussägen der Türöffnung, von oben in das Holz eingefahren, sägt in die eine Richtung bis zur Türöffnungsoberkante, wird aus dem Holz zurückgezogen, um 90° gedreht, fährt wieder ins Holz ein, sägt weiter, muß wieder in vertikaler Richtung zurückgefahren und um 90° gedreht werden, wonach die zweite Seitenkante der Türöffnung ausgesägt wird. Auf diese Art kann eine Platte nach der anderen bearbeitet werden. Jedoch benötigt das Umrüsten des bearbeiteten Werkstückes und das Auflegen eines neuen, noch unbearbeiteten Werkstückes verhältnismäßig viel Zeit, innerhalb der die Holzbearbeitungsanlage bei dieser Ausgestaltung nicht verwendet werden kann. Einen höheren Durchsatz erreicht man durch die Bearbeitung von zwei Werkstücken gleichzeitig, wobei das Portal zwischen den beiden Bearbeitungsplätzen hin- und herfährt. Während das parallel aufgelegte Werkstück durch das Bearbeitungswerkzeug an dem Portal bearbeitet wird, kann der benachbarte, parallel angeordnete Bearbeitungsplatz umgerüstet werden. Somit wird für das Bearbeitungswerkzeug bzw. das Portal eine Totzeit vermieden und die Effizienz deutlich gesteigert.

Der Werktisch wird von Verschleißlatten gebildet, da er beim Sägen oder Bohren des Werkstücks leicht beschädigt werden kann. Die Verschleißlatten können bei Bedarf einfach und kostengünstig ausgetauscht werden. Da die vertikale Position des Bearbeitungswerkzeuges leicht definierbar und damit auch steuerbar ist, kann vorgesehen werden, die Verschleißlatten nur verhältnismäßig dünn auszugestalten und diese in einem Bett anzuordnen, in dem diese gelagert sind. Dadurch wird der Aufwand für die Verschleißlatten weiter gering gehalten. Alternativ ist vorgesehen, den Werktisch mit einer Vielzahl vertikal und/oder horizontal verschiebbarer Werkstückstützen auszugestalten, die entsprechend der vorgesehen Bearbeitung, bevorzugt inbesondere von einer numerischen oder computergesteuerten Anlage, derart angesteuert werden, daß ein Unterstützen nur in diesen Bereichen erfolgt, in denen das Bearbeitungswerkzeug nicht eintaucht und so eine Kollision mit Sicherheit nicht stattfinden kann. In gleicher Weise ist es aber auch möglich, die Werkstücke durch horizontal in das Werkstück eingetriebene Stifte zu halten. Die Werkstückstützen sind dabei wahlweise auch mit einer Festklemmeinrichtung, zum Beispiel mit einer schraubzwingenartigen Ausgestaltung ausgestattet, die es erlaubt, das Werkstück, welches zum Beispiel als Platte ausgebildet ist, seitlich festzuhalten. Dadurch ist es möglich, das Werkstück sehr zuverlässig festzulegen.

Die Werkstücke können auch im Flußkonzept angeordnet sein, wobei das Portal während deren Bearbeitung in Förderrichtung mitfährt.

Es ist möglich, die Sägearbeiten durch eine Kreis- oder Stichsäge auszuführen. Die Kreissäge jedoch hat den Nachteil, daß das kreisrunde Sägeblatt im Endbereich eine Rundung hinterläßt, die unerwünscht ist. Eine Stichsäge benötigt beim Ansatz in der Platte eine Bohrung; hierfür ist ein anderes Bearbeitungswerkzeug notwendig. Es ist vorteilhafterweise zum Ausführen der Sägearbeiten eine Kettensäge vorgesehen, die überall angesetzt werden kann und sich auch selbsttätig in eine Platte oder dergleichen hineinarbeitet.

Die Verwendung einer Kettensäge als Bearbeitungswerkzeug ist aber nicht nur im Hinblick auf die Bearbeitung selbst von Vorteil, sondern bietet auch bei dem Spannen und Festhalten des Werkstücks vorteile. Bei einer Kettensäge wird fast keine horizontale Kraft in das Werkstück eingeprägt. Der Aufwand, das Werkstück zu halten, ist gegenüber der Verwendung einer Kreisoder Stichsäge wesentlich geringer.

In einer Variante der Erfindung ist vorgesehen, daß die Abstützelemente auf einem Kranz an dem Portal angeordnet sind und der Kranz gegen das Werkstück anstellbar ist. Dabei ist vorgesehen, daß der Kranz bezüglich des Bearbeitungswerkzeuges unabhängig gegen das Werkstück anstellbar ist. Hierzu reicht günstigerweise ein eigenständiger Arbeitszylinder, zum Beispiel ein Pneumatikzylinder, aus, der es erlaubt eine Vielzahl von Abstützelementen zu bewegen. Dabei ist vorgesehen, daß an dem Träger zum Beispiel linear oder halbkreisartig mehrere Abstützelemente gehalten sind. Diese sind vor, hinter und/oder seitlich neben dem Bearbeitungswerkzeug angeordnet. Günstigerweise werden die Abstützelemente in einer bevorzugten Ausgestaltung auf einem Kranz um das Bearbeitungswerkzeug herum angeordnet, wodurch eine gleichmäßige Fixierung erreicht wird. Der Kranz, beziehungsweise Träger ist dabei zum Beispiel vom Portal oder dem Kreuzschlitten gehalten und erfährt die gleiche Bewegung wie das Bearbeitungswerkzeug. Mit einer solchen Ausgestaltung wird erreicht, daß im Bereich des Bearbeitungswerkzeuges die Abstützelemente wirksam sind und so das Werkstück zuverlässig auf dem Werktisch festdrücken und festhalten.

Günstigerweise ist an dem einzelnen Abstützelement oder an dem Kranz ein Sensor vorgesehen, der erkennt, wenn das Abstützelement auf dem Werkstück aufliegt. Dadurch ist es möglich, die relative Höhe des Werkstückes und die Position des Kranzes hierzu zu bestimmen, um dadurch eine gewisse Einschnitttiefe des Werkzeuges im Werkstück bestimmen zu können. Hierzu ist an der Höhenverstellung des Kranzes eine entsprechende Meßvorrichtung angeordnet, die mit einer Steuerung der Anlage verbunden ist, die ihrerseits wiederum die Höhenstellung des Bearbeitungswerkzeuges eigenständig regelt. Es kann auch vorgesehen sein, daß der Kranz leicht pendelnd oder schwimmend gelagert ist, um Höhenunebenheiten des Werkstückes folgen zu können. Alternativ ist vorgesehen, daß das Abstützelement in Anstellrichtung gegen das Werkstück federgelagert ist und ebenfalls einen gewissen Ausgleich erreicht bzw. umgekehrt auch mit einer entsprechend einstellbaren Kraft auf das Werkstück drückt.

Insbesondere die Verwendung eines oder mehrerer Abstütz- oder Preßrades/-räder als Abstützelement ist günstig, da das Abstützelement somit mit dem Portal mitfahrend ist und günstigerweise in unmittelbarer Nähe zu dem Bearbeitungspunkt des Bearbeitungswerkzeuges an dem Werkstück positioniert ist und somit die Haltekraft optimal eingesetzt wird. Bei einer solchen Ausgestaltung wird ein dynamisch mit dem Portal mitfahrendes Abstützelement geschaffen, das dadurch in gleicher Weise auch vertikal verstellbar ist, um das Werkstück gegebenenfalls wieder freizugeben.

Es ist sinnvoll, zur Halterung des Werkstückes, insbesondere wenn es sich bei dem Werkstück um eine Platte handelt, nicht nur ein Abstütz- bzw. Pressrad vorzusehen, sondern auch zwei und mehr. Dadurch wird erreicht, daß das ganze Werkstück eben auf dem Werktisch aufliegt und nicht nur in dem Bereich, in dem es gerade bearbeitet wird. Ein Verrutschen des Werkstücks wird mit zunehmender Anzahl von Abstützelementen vermindert und somit die Bearbeitungsgenauigkeit erhöht, da ein Verwinden/Verrutschen von größeren Werkstücken vermieden wird. Die Abstützelemente sind über das gesamte Werkstück gleichmäßig verteilt, um eine sichere Auflage zu gewährleisten. Bei Abstütz- bzw. Pressrädern genügt es wahrscheinlich, diese in einer Linie über die Breite des Werkstücks zu verteilen und am dem Portal zu befestigen, da die Abstütz- bzw. Pressräder mit dem Portal mitfahren und das Werkstück in Bearbeitungshöhe über die ganze Breite gleichmäßig auf dem Werktisch aufdrücken. Bei einer relativen Bewegung des Portals gegenüber dem. Werkstück kommen die Abstützräder außerhalb des Bereichs des ersten Werkstücks und rollen direkt auf das nachgeordnete Werkstück über. Es ist dadurch nicht notwendig, die Abstützräder erst vom ersten Werkstück abzuheben um es auf dem zweiten wieder aufzusetzen, sondern bei einer dichten Aufeinanderfolge von Werkstücken bleiben die Abstützräder in ihrer Lage fest. Gegebenenfalls wird das Bearbeitungswerkzeug angehoben und außer Eingriff mit dem Werkstück gebracht.

Für die Leichtgängigkeit des/der Abstützräder ist vorgesehen, daß das Abstütz- bzw. Pressrad um eine erste Achse drehbar und um eine zweite Achse verschwenkbar ist, die beiden Achsen im wesentlichen rechtwinklig zueinander angeordnet sind und der Auflagepunkt des Rades nicht auf der zweiten Achse liegt. Durch diese Anordnung wird erreicht, daß bei jeder beliebiger Bewegung des Rades auf dem Werkstück bei einer Drehbewegung ein Drehmoment auf den Auflagepunkt derart wirkt, daß sich das Rad immer in die jetzt benötigte Bewegungsrichtung stellt. Die vorgenannte Anordnung kann zum Beispiel durch eine Anordnung der ersten und zweiten Achse derart erreicht werden, daß sich diese beiden Achsen nicht schneiden.

Die Erfindung wird nachfolgend mit einem Werktisch beschrieben, auf welchem das Werkstück aufliegt. Die Erfindung ist aber in gleicher Weise auch in Bauweisen realisierbar, bei denen das Werkstück von unten bearbeitet und oben oder seitlich gehalten wird; die Erfindung soll sich in gleicher Weise auch auf diese Ausgestaltung beziehen.

In einer Variante der Erfindung ist vorgesehen, das Werkstück in einem Flußkonzept anzuordnen, wobei das Portal während der Bearbeitung in Förderrichtung mitfährt. Der erfindungsgemäße Vorschlag ist somit in mindestens drei verschiedenen Varianten einsetzbar. In einer ersten Version wird das Portal für die Bearbeitung eines Werkstückes verwendet, in einer zweiten Variante pendelt das Portal zwischen zwei nebeneinander angeordneten Werkstücken, wobei ein Werkstück, welches nicht bearbeitet wird, frei zum Abtransport bzw. Antransport ist, im dritten Konzept bewegt sich das Werkstück während der Bearbeitung in Förderrichtung, das Portal bewegt sich ebenfalls in Förderrichtung oder gegen diese, aber jeweils mit einer solchen Geschwindigkeit, damit eine Relativbewegung zwischen dem Portal und dem geförderten Werkstück resultiert. Ein Flußkonzept ist insbesondere dann von Vorteil, wenn eine große Leistung abgearbeitet werden soll bzw. weite Strecken zum Beispiel in einer Fertigungsstraße zurückzulegen sind.

In einer weiteren Ausgestaltung der Erfindung ist vorgesehen, daß die Position des Portals relativ zum Werkstück und/oder die Position des Bearbeitungswerkzeuges relativ zum Werkstück von einer Steuerung, insbesondere einer computergestützten Steuerung, überwacht wird. Die Steuerung entnimmt zum Beispiel aus einem Datenspeicher die zu realisierenden Bearbeitungswerte, wie zum Beispiel Position, Breite und Höhe einer Türöffnung in dem Wandelement eines Hauswandelementes. Das aufgelegte Werkstück ist hierbei zum Beispiel auf Anschlägen derart fixiert, daß die relative Position des Portals bzw. des Bearbeitungswerkzeuges bezüglich des Werkstückes festliegt. Dies kann zum Beispiel aber auch durch an dem Portal mitgeführte Sensoren oder Anschläge erreicht werden. Die Steuerung, die ihrerseits die Daten bzw. Positionen der einzelnen Bearbeitungswerkzeuge kennt und auswertet, positioniert mit Hilfe der verschiedenen Stellantriebe (Verfahren längs der Schiene, Verfahren der Kreuzschlitten, Verschwenkung um die Achsen) das Bearbeitungswerkzeug derart, wie es im Bauplan bzw. in den Daten in dem Bearbeitungsspeicher vorgegeben ist.

Durch eine solche Ausgestaltung, die natürlich auch eine manuelle handgesteuerte Bearbeitung in gleicher Weise zuläßt, wird die erfindungsgemäße Holzbearbeitungsanlage Bestandteil einer computerintegrierten Herstellungslinie.

In einer bevorzugten Ausgestaltung der Erfindung ist vorgesehen, daß das Schwert der Kettensäge derart ausgebildet ist, daß das Schwert an seinem vorderen, zuerst in das Werkstück eingreifenden Endbereich seine größte Breite aufweist. Bei den bekannten Kettensägenschwertern wird eine im wesentlichen gegen das freie Ende spitz zusammenlaufende Ausgestaltung des Schwertes realisiert. Diese Ausgestaltung hat aber im Hinblick auf eine maßgenaue Bearbeitung Nachteile. Das Schwert wird in der Regel rechtwinklig zur Werkstückoberfläche in diese eingeführt. verläuft nun die Schwertkante nicht ebenfalls rechtwinklig, sondern hierzu versetzt, passiert es, daß beim Eintauchen des Schwertes in das Werkstück die eigentliche Bearbeitungskante entsprechend der Dicke des Schwertes bzw. des Spreizwinkels versetzt wird. Dies bedeutet, daß eine maßgenaue Bearbeitung nicht möglich ist, da sich diese nur am breitesten Bereich des Schwertes orientiert. Wird nun das Schwert nicht ganz in das Werkstück eingefahren, sondern nur in einen gewissen Bereich, so ist eine maßgenaue Bearbeitung nicht möglich, da insbesondere zu beachten ist, daß die bekannten Schwerter Maßdifferenzen zwischen dem vorderen, freien Ende und dem hinteren Ende (an welchem der Antrieb sitzt) von 2 cm und mehr aufweisen. Eine genaue Einarbeitung der Kante ist nicht möglich.

Vorgenannte Holzbearbeitungsanlagen sollen aber eine sehr hohe Bearbeitungsgenauigkeit ermöglichen, wobei gleichzeitig auch eine hohe Komfortabilität erreicht werden soll. Insbesondere wenn das Schwert nicht vollständig in das Werkstück eingeführt werden soll, zum Beispiel bei der Bearbeitung nur bis zu einer gewissen Tiefe, soll trotzdem eine entsprechende Genauigkeit erreicht werden. Um dies zu erreichen, wurde die Konstruktion des Schwertes geändert, so daß der breiteste Bereich des Schwertes im unteren, in das Werkstück zuerst eingreifenden Endbereich angeordnet ist. Dadurch ist die maximale Bearbeitungskante bzw. Eingriffkante genau definiert, und zwar auf geringer Bearbeitungstiefe. Natürlich schließt diese Konstruktion nicht aus, daß der Bereich der größten Breite sich über eine. gewisse Höhe entlang des Schwertes erstreckt, also so im wesentlichen parallel ausgebildet ist. Es ist aber sichergestellt, daß gerade im Eingriffsbereich das größte Maß anliegt.

Das Schwert weist in seinem unteren Bereich eine oder mehrere Umlenkrollen für die Sägekette auf. Der Umfang dieser Rollen bestimmt letztendlich die maximale Breite des Schwertes, wobei dieser Wert nicht an der vordersten Spitze des Schwertes erreicht wird, sondern in dem vorderen Endbereich, der gegebenenfalls ein Viertel oder ein Drittel der gesamten Länge des Schwertes ausmachen kann.

Dabei ist zu beachten, daß diese erfindungsgemäße Weiterentwicklung der Holzbearbeitungsanlage natürlich auch bei Kettensägen allein von Interesse ist. Durch die vorgestellte Verbesserung wird aber erreicht, daß insbesondere die erfindungsgemäßen Holzbearbeitungsanlagen eine hohe Maßgenauigkeit bei der Bearbeitung erreichen.

In einer weiteren erfindungsgemäßen Ausgestaltung wird vorgeschlagen, daß die Schienen, die zur Führung und Abstützung des Portales dienen, auf gleichem oder unterschiedlichem Niveau liegen. Bei der ersten Variante sitzt das Portal auf zwei im wesentlichen gleich ausgestalteten Seitenteilen, die auf sich die Brücke tragen, welche das Werkstück überragt oder überspannt. Die Seitenteile sind auf einer Schienenbahn gelagert, die neben dem Werkstück verläuft. Überlicherweise befinden sich bei einer solchen Ausgestaltung die Schienen auf gleichem Niveau und sind als Führung im wesentlichen gleichwertig.

Es besteht aber auch eine Variante derart, daß eine Führungsbahn bzw. Schienenbahn höher angeordnet ist, insbesondere über der Oberfläche des zu bearbeitenden Werkstückes. Hierzu ist zum Beispiel ein entsprechender Aufbau neben dem Werktisch vorgesehen. In einem solchen Fall liegen die beiden Führungsschienen nicht auf gleichem Niveau, die höhere Führungsschiene dient als Hauptführung, die tiefer liegende als Nebenführung. Die Bewegung des Portals kann dabei durch einen Antrieb erfolgen, der nur auf die Hauptführung oder auf Hauptführung und Nebenführung wirkt. Günstiger ist ein Antrieb beider Seitenteile für eine gleichmäßige Bewegung, wie es zum Beispiel bei einer Ausgestaltung mit auf gleichem Niveau angeordneten Schienen vorgesehen ist.

Der Antrieb ist dabei bevorzugt mechanisch unabhängig voneinander, aber um eine hohe Gleichlaufeigenschaft zu erreichen, elektronisch miteinander gekoppelt.

Die erfindungsgemäße Holzbearbeitungsanlage ist im folgenden anhand der Zeichnung näher beschrieben.

Es zeigen:
- Fig. 1: eine Seitenansicht der erfindungsgemäßen Holzbearbeitungsanlage,
- Fig. 2: die erfindungsgemäße Holzbearbeitungsanlage in Draufsicht.

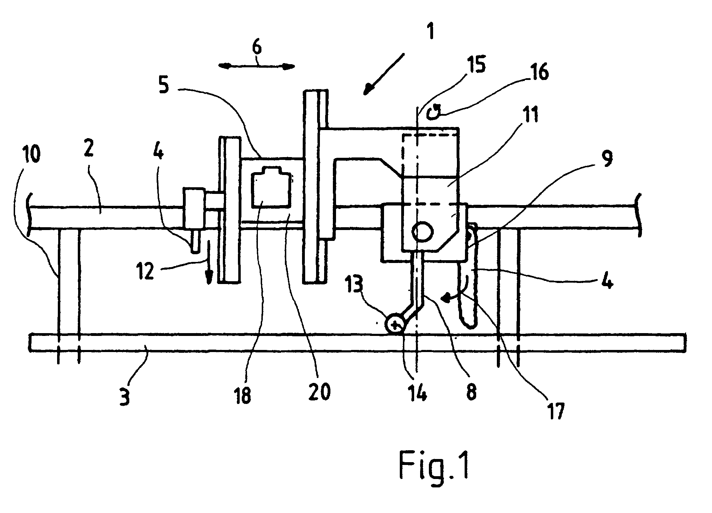

In den Figuren ist mit 1 das Portal einer Holzbearbeitungsanlage bezeichnet. Dies ist über einen Antrieb verschiebbar auf Schienen 2 gelagert. In der in Fig. 1 gezeigten Ausgestaltung befindet sich auch die Schiene 2 über dem Werkstück 3. Es ist aber in gleicher Weise möglich, die Schiene 2 unterhalb des Werkstückes 3 anzuordnen. Die Schiene 2 wird in Fig. 1 auf Stützen 10 getragen. Die Bewegungsrichtung des Portales 1 auf den Schienen 2 ist mit 6 gekennzeichnet und verläuft parallel zu den Schienen 2. In dieser Ausführung liegt das Werkstück 3 unterhalb des Portals 1 auf einem Werktisch auf, so daß das Bearbeitungswerkzeug 4 von oben zum Werkstück 3 hinabfährt. Das Bearbeitungswerkzeug 4 ist, über ein Zwischenstück 11 verschwenkbar, mit einem am Portal 1 angeordneten Kreuzschlitten 5 verbunden, wobei der Kreuzschlitten 5 jeweils senkrecht zur Bewegungsrichtung 6 des Portals 1 in zwei weitere Richtungen bewegbar ist. Das zwischenstück 11 ermöglicht es, das Bearbeitungswerkzeug 4, 9 um mindestens eine Achse zu verdrehen. Es ist zum Beispiel vorgesehen, ein kardanähnliches Gelenk anzuordnen, das eine Verschwenkung um zwei rechtwinklig zueinander orientierten Achsen erlaubt und so auch beliebige Lagen des Bearbeitungswerkzeuges 4 bezüglich des Werkstückes 3 erlaubt. Somit ist es möglich, jede beliebige Bearbeitung am Werkstück 3 auszuführen. In Fig. 1 ist die Verschwenkbarkeit des Bearbeitungswerkzeuges 9 mit dem Pfeil 17 angedeutet.

Zum Schneiden von Öffnungen bei Platten eignet sich als Bearbeitungswerkzeug 4 insbesondere eine Kettensäge 9, die den Vorteil hat, daß sie sich selbständig durch die Platte durcharbeitet und fast keine horizontale Kraft auf das Werkstück 3 einprägt, was sich für den Aufwand der Befestigung des Werkstücks 3 auf dem Werktisch positiv auswirkt.

Zum Bohren von Löchern oder für Fräsarbeiten können an dem Werkzeughalter weitere Werkzeuge 4, wie Bohrer, Fräser oder auch eine Kreissäge, auch als Werkzeugmagazin vorgesehen sein. Um das Bearbeitungswerkzeug 4 gegen das Werkstück 3 anzustellen, ist eine Bewegung 12, in Fig. 1 zum Beispiel als vertikal nach unten orientierter Pfeil angedeutet, vorgesehen.

Zur Befestigung des Werkstücks 3 auf dem Werktisch sind Spaxhalter, Nadeln und Anschläge vorgesehen. Sie sind in den Figuren nicht näher dargestellt.

Es ist auch möglich, das Werkstück 3 mit einem Abstützelement 8 in Form eines Abstütz- oder Preßrades 13 auf dem Werktisch 7 zu fixieren, wobei das Abstützelement 8 auf dem Werkzeugträger mitfährt und von oben auf der Platte aufliegt. Für eine Leichtgängigkeit bei beliebigen Bewegungen ist ein Versatz der ersten, horizontal orientierten Drehachse 14 zur zweiten, vertikal orientierten Verschwenkachse 15 derart vorgesehen, daß sich der Auflagepunkt des Rades 13 nicht auf der Verschwenkachse 15 befindet. Die Drehbarkeit des Abstützelementes 8 um die vertikale Verschwenkachse ist mit dem kleinen gebogenen Pfeil 16 angeordnet. Damit das Abstützelement 8 auf dem Werkstück 3 in alle Richtungen verfahrbar ist, ist es zum Beispiel als Nachlaufrolle ausgebildet oder anstelle des Rades mit einem kugelförmigen Element versehen.

Sinnvollerweise ist zum Halten des Werkstückes nicht nur ein Abstützelement bzw. Abstütz- oder Pressrad vorgesehen, sondern mehrere, die über das gesamte Werkstück gleichmäßig verteilt sind. Dadurch wird ein Verwinden des Werkstücks vermieden, was zu einer höheren Bearbeitungsgenauigkeit führt.

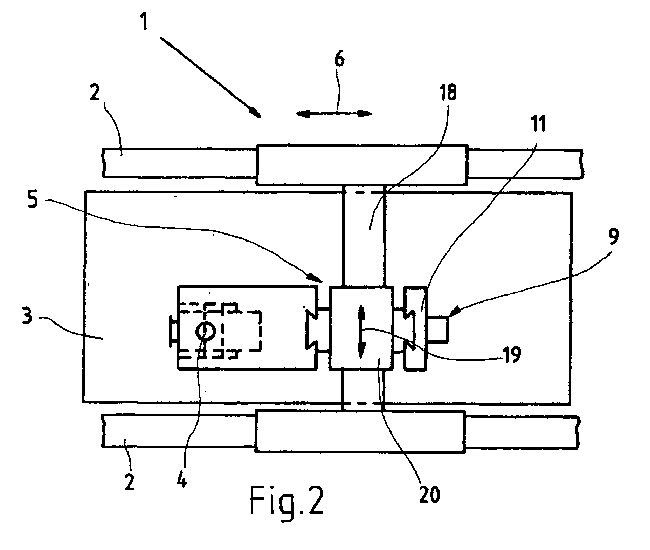

In Fig. 2 ist in einer Draufsicht die erfindungsgemäße Holzbearbeitungsanlage gezeigt. Das Portal 1 ist auf der neben dem Werkstück 3 angeordneten Schienenbahn 2 verschiebbar gelagert. Der Kreuzschlitten 5 ermöglicht, daß das Bearbeitungswerkzeug 4 bzw. 9 in einer Ebene, die rechtwinklig zur längs erstreckenden Schienenbahn 2 (angedeutet durch den Doppelpfeil) beweglich ist. Die Bewegung des Kreuzschlittens 5 auf der Strebe 18 ist in dem Doppelpfeil 19 angeordnet. Die dritte Komponente, die Absenkbewegung 12, wird ebenfalls durch eine entsprechende Schlittenführung der Werkzeugträger 11 an dem auf der Querstrebe 18 verschiebbaren Mittelstück 20 erreicht.

Es ist auch vorgesehen, daß an dem Portal nicht nur ein Bearbeitungswerkzeug zum Einsatz kommt, sondern gegebenenfalls auch ein zweites oder mehrere Bearbeitungswerkzeuge gleichzeitig oder unter Ausnützung der Positionierung des Portales hintereinander eingesetzt werden können, ohne jedesmal das Bearbeitungswerkzeug wechseln zu müssen. Zum Beispiel ist vorgesehen, daß an dem Portal neben der Kettensäge auch ein Fräser, zum Beispiel ein Fingerfäser, vorgesehen ist, der dabei eine gleiche Beweglichkeit wie das Hauptbearbeitungswerkzeug (hier die Kettensäge) aufweisen kann, zum Beispiel eine Beweglichkeit um fünf Achsen oder eine nur reduzierte Beweglichkeit, nämlich um drei Achsen (zwei Achsen gemäß der Bewegung des Portales und Kreuzschlittens, die dritte Achse in Richtung auf das Werkstück). Es ist auch vorgesehen, daß an dem Portal für die weiteren Bearbeitungswerkzeuge unabhängige Positionierantriebe vorgesehen sind.

Die auf einem Kranz angeordneten Abstützelemente (zum Beispiel Räder oder Rollen) werden im Einsatz ebenfalls pneumatisch gegen das Werkstück angestellt, wobei dann zum Festhalten bzw. Festdrücken eine höhere Kraft auf die Arbeitszylinder gegeben werden kann. Dabei ist es günstig, daß die Rollen nochmals federgelagert sind und einen Federweg von wenigen Millimetern (bis zu 20 mm) und verhältnismäßig steife Federn aufweist, um eine möglichst gleichmäßig hohe Krafteinleitung zum Abstützen zu erreichen. Dabei ist gefunden worden, daß der Einsatz der Abstützelemente ausreicht, das Werkstück sicher und positionsgenau auf dem Werktisch zu halten.

## Patentansprüche

1. Holzbearbeitungsanlage in Portalbauweise für Werkstücke, insbesondere Balken, Platten oder Bauelemente, wie vorgefertigte Wände, die im wesentlichen aus Holz bestehen, wobei das Portal das Werkstück über- oder untergreift und an dem Portal ein Bearbeitungswerkzeug vorgesehen ist, das mindestens in einer Ebene auf dem Portal bewegbar angeordnet und gegen das Werkstück anstellbar ist, wobei das Portal (1) selbst auf Schienen (2) geführt ist, die entlang des Werkstückes (3) vorgesehen sind, und die Bewegung des Portals auch der Bewegung des Bearbeitungswerkzeugs (4) dient, **dadurch gekennzeichnet, daß** das Werkstück (3) von einem oder mehreren Abstützelementen (8) gehalten ist und das Abstützelement (8) am Portal (1) angeordnet ist und das Abstützelement (8) das Werkstück (3) auf den Werktisch drückt und so fixiert.

2. Holzbearbeitungsanlage nach Anspruch 1, **dadurch gekennzeichnet, daß** das Abstützelement (8) ein oder mehrere Abstütz- bzw. Preßräder (13) sind, die insbesondere in Anstellrichtung gegen das Werkstück federgelagert sind.

3. Holzbearbeitungsanlage nach Anspruch 2, **dadurch gekennzeichnet, daß** das/die Abstütz-/Preßrad/-räder (13) um eine erste Achse drehbar und um eine zweite Achse verschwenkbar ist/sind, die beiden Achsen im wesentlichen rechtwinklig zueinander angeordnet sind und der Auflagepunkt des Rades (13) nicht auf der zweiten Achse liegt.

4. Holzbearbeitungsanlage nach einem der vorhergehenden Ansprüche, **dadurch gekennzeichnet, daß** das Bearbeitungswerkzeug an dem Portal (1) auf einem in horizontaler und vertikaler Richtung beweglichen Kreuzschlitten (5) angeordnet ist und insbesondere an dem Kreuzschlitten (5) ein um ein oder mehrere Achsen drehbares Zwischenstück (11) und an diesem das Bearbeitungswerkzeug (4) angeordnet ist.

5. Holzbearbeitungsanlage nach einem der vorhergehenden Ansprüche, **dadurch gekennzeichnet, daß** wenigstens eine Kettensäge, Kreissäge, ein Fräser oder Bohrer als Bearbeitungswerkzeug (4) vorgesehen ist.

6. Holzbearbeitungsanlage nach einem der vorhergehenden Ansprüche, **dadurch gekennzeichnet, daß** auf dem Portal (1) mehrere Bearbeitungswerkzeuge (4) beziehungsweise ein Werkzeugmagazin mit verschiedenen Bearbeitungswerkzeugen angeordnet ist.

7. Holzbearbeitungsanlage nach einem der vorhergehenden Ansprüche, **dadurch gekennzeichnet, daß** das Werkstück (3) auf einer Arbeitsfläche des Werktisches aufliegt, die von Verschleißlatten gebildet ist.

8. Holzbearbeitungsanlage nach einem der vorhergehenden Ansprüche, **dadurch gekennzeichnet, daß** auf der Arbeitsfläche zwei oder mehrere Werkstücke (3) aufliegen können, wobei das Portal (1) zwischen den Werkstücken (3) zu deren Bearbeitung hin- und herfahren kann.

9. Holzbearbeitungsanlage nach einem der vorhergehenden Ansprüche, **dadurch gekennzeichnet, daß** die Werkstücke (3) in einem Flußkonzept angeordnet sind, wobei das Portal (1) während der Bearbeitung die Förderrichtung der Werkstücke berücksichtigt.

10. Holzbearbeitungsanlage nach einem der vorhergehenden Ansprüche, **dadurch gekennzeichnet, daß** das Abstützelement (8) gegen das Werkstück (3) bewegbar ist.

11. Holzbearbeitungsanlage nach einem der vorhergehenden Ansprüche, **dadurch gekennzeichnet, daß** die Position des Portals (1) relativ zum Werkstück (3) und/oder die Position des Bearbeitungswerkzeugs (4) relativ zum Werkstück (3) von einer Steuerung, inbesondere einer computerunterstützten Steuerung, überwacht und geregelt wird.

12. Holzbearbeitungsanlage nach einem der vorhergehenden Ansprüche, **dadurch gekennzeichnet, daß** die Abstützelemente (8) auf einem Träger oder Kranz an dem Portal (1), insbesondere um das Bearbeitungswerkzeug (4) herum, angeordnet sind und der Träger/Kranz gegen das Werkstück (3) anstellbar ist.

13. Holzbearbeitungsanlage nach Anspruch 5, **dadurch gekennzeichnet, daß** das Schwert der Kettensäge derart ausgebildet ist, daß das Schwert zumindest an seinem vorderen, zuerst in das Werkstück (3) eingreifenden Endbereich seine größte Breite aufweist.

14. Holzbearbeitungsanlage nach einem der vorhergehenden Ansprüche, **dadurch gekennzeichnet, daß** die Schienen zur Führung und Abstützung des Portals (1) auf gleichem oder unterschiedlichem Niveau liegen.

## Claims

1. Wood working arrangement in portal construction for workpieces, in particular beams, slabs or construction elements like prefabricated walls consisting essentially of wood, the portal grabbing over or below the workpiece and a machining tool being provided at the portal which is arranged in such a way that it can move at least in one plane on the portal and can be adjusted against the workpiece, the portal (1) itself being guided on rails (2) which are provided along the workpiece (3) and the movement of the portal also serving for the movement of the machining tool (4), **characterised in that** the workpiece (3) is held by one or more support elements (8) and the support element (8) is arranged at the portal (1) and the support element (8) presses the workpiece (3) on the working table and thus fixes it.

2. Wood working arrangement according to claim 1, **characterised in that** the support element (8) consists of one or more support, respectively press wheels (13), which are, in particular in the direction of adjusting, supported by springs against the workpiece.

3. Wood working arrangement according to claim 2, **characterised in that** the support/press wheel(s) (13) can be turned around a first axis and be swivelled around a second axis, both axes being arranged essentially rectangular to each other and the point of support of the wheel (13) is not located on the second axis.

4. Wood working arrangement according to one of the preceding claims, **characterised in that** the machining tool is arranged at the portal (1) on a cross slide (5) which can move in horizontal and vertical direction and a transition piece (11) which can turn around one or more axes is arranged in particular on the cross slide (5) and the machining tool (4) is arranged on the latter.

5. Wood working arrangement according to one of the preceding claims, **characterised in that** at least one chain saw, circular saw, one milling cutter or drill is provided as machining tool (4).

6. Wood working arrangement according to one of the preceding claims, **characterised in that** on the portal (1) several machining tools (4), respectively a tool magazine with different machining tools, is arranged.

7. Wood working arrangement according to one of the preceding claims, **characterised in that** the workpiece (3) is supported by a working surface of the working table which is formed by wear battens.

8. Wood working arrangement according to one of the preceding claims, **characterised in that** two or more workpieces (3) can be supported by the working surface, the portal (1) being able to move back and forth between the workpieces (3) in order to machine them.

9. Wood working arrangement according to one of the preceding claims, **characterised in that** the workpieces (3) are arranged in a flow concept, the portal (1) taking into account the direction of conveying of the workpieces during the machining.

10. Wood working arrangement according to one of the preceding claims, **characterised in that** the supporting element (8) can be moved against the workpiece (3).

11. Wood working arrangement according to one of the preceding claims, **characterised in that** the position of the portal (1) relatively to the workpiece (3) and/or the position of the machining tool (4) relatively to the workpiece (3) is monitored and controlled by a control, in particular by a computer-aided control.

12. Wood working arrangement according to one of the preceding claims, **characterised in that** the supporting elements (8) are arranged on a carrier or ring on the portal (1), in particular around the machining tool (4), and that the carrier/ring can be adjusted against the workpiece (3).

13. Wood working arrangement according to claim 5, **characterised in that** the sword-like part of the chain saw is designed in such a way that it has at least on its front end region which engages into the workpiece (3) first its largest width.

14. Wood working arrangement according to one of the preceding claims, **characterised in that** that the rails for guiding and supporting the portal (1) are on the same or a different level.

## Revendications

1. Machine d'usinage de bois, ayant une structure en forme de portique destinée à l'usinage de pièces comme des poutres, des plaques ou des éléments de construction tels des murs préfabriqués consistant principalement en du bois, ledit portique (1) passant soit au-dessus soit en dessous de la pièce à usiner supporte un outil d'usinage, qui peut être déplacé sur ce portique dans au moins un plan et incliné par rapport à la pièce à usiner, ledit portique étant monté sur des rails (2) longeant la pièce à usiner (3) permettant ainsi par son propre mouvement le déplacement de l'outil d'usinage (4), **caractérisée en ce que** la pièce à usiner (3) est maintenue par un ou plusieurs éléments d'appui (8), l'élément d'appui (8) fixé au niveau du portique (1) appuie et fixe la pièce à usiner (3) sur la table d'usinage.

2. Machine d'usinage de bois selon la revendication 1, **caractérisée en ce que** l'élément d'appui (8) est formé d'une ou plusieurs roues d'appui (13) possédant des ressorts qui agissent en particulier dans le sens de l'appui contre la pièce à usiner.

3. Machine d'usinage de bois selon la revendication 2, **caractérisé en ce que** la ou les roues d'appui ou roues de pression (13) peuvent tourner autour d'un premier axe et pivoter autour d'un deuxième axe, les deux axes étant approximativement perpendiculaires l'un à l'autre et le point d'appui de la roue (13) n'étant pas situé sur le deuxième axe.

4. Machine d'usinage de bois selon l'une des revendications précédentes, **caractérisée en ce que** l'outil d'usinage (4) est fixé, en particulier via une pièce intermédiaire (11) pivotant autour d'un ou plusieurs axes, sur un coulisseau (5) situé au niveau du portique (1) et pouvant être déplacé dans les directions horizontale et verticale.

5. Machine d'usinage de bois selon l'une des revendications précédentes, **caractérisée en ce qu'**au moins une scie à chaîne, une scie circulaire, une fraiseuse ou un foret sert comme outil d'usinage (4).

6. Machine d'usinage de bois selon l'une des revendications précédentes, **caractérisée en ce que** plusieurs outils d'usinage (4) ou un magasin à outils comportant plusieurs outils d'usinage différents sont situés au niveau du portique (1).

7. Machine d'usinage de bois selon l'une des revendications précédentes, **caractérisée en ce que** la pièce à usiner (3) pose sur le plan de travail constitué de lattes remplaçables de la table d'usinage.

8. Machine d'usinage de bois selon l'une des revendications précédentes, **caractérisée en ce que** deux ou plusieurs pièces à usiner (3) peuvent être posées sur le plan de travail de la table d'usinage et **en ce que** le portique (1) peut se déplacer par un mouvement de va-et-vient entre les pièces à usiner (3) afin de pouvoir les usiner.

9. Machine d'usinage de bois selon l'une des revendications précédentes, **caractérisée en ce que** les pièces à usiner (3) circulent suivant un flux donné et **en ce que** le portique (1) s'adapte à la direction de déplacement des pièces à usiner lors de leur usinage.

10. Machine d'usinage de bois selon l'une des revendications précédentes, **caractérisée en ce que** l'élément d'appui (8) peut être déplacé vers la pièce à usiner (3).

11. Machine d'usinage de bois selon l'une des revendications précédentes, **caractérisée en ce qu'**un système de contrôle et en particulier un contrôleur assisté par ordinateur surveille et ajuste la position relative du portique (1) par rapport à celle de la pièce à usiner (3) et/ou la position relative de l'outil d'usinage (4) par rapport à celle de la pièce à usiner (3).

12. Machine d'usinage de bois selon l'une des revendications précédentes, **caractérisée en ce que** les éléments d'appui (8) sont situés sur un support ou sur une couronne au niveau du portique (1) et en particulier autour de l'outil d'usinage (4), et **en ce que** le support ou la couronne peut être incliné contre la pièce à usiner (3).

13. Machine d'usinage de bois selon la revendication 5, **caractérisée en ce que** la lame de la scie à chaîne possède une configuration telle qu'au moins un des endroits les plus larges de la lame est situé au niveau de la première partie de son extrémité, attaquant en premier la coupe de la pièce à usiner (3).

14. Machine d'usinage de bois selon l'une des revendications précédentes, **caractérisée en ce que** les rails de guidage et d'appui du portique (1) sont soit sur un même plan soit sur des niveaux différents.
